# EUROPÄISCHE PATENTSCHRIFT

(11) **EP 2 637 749 B1**
(45) Veröffentlichungstag und Bekanntmachung des Hinweises auf die Patenterteilung: **04.01.2017**
(21) Anmeldenummer: 11808153.8
(22) Anmeldetag: 10.11.2011
(51) Int. Cl.: A62C 4/02

(54) **SICHERHEITSARMATUR ZUM SPERREN EINER LEITUNG**
SAFETY FITTING FOR BLOCKING A CONDUIT
FERRURE DE SÉCURITÉ POUR OBTURER UNE CONDUITE

(30) Priorität: 10.11.2010 DE 102010050782
(43) Veröffentlichungstag der Anmeldung: 18.09.2013
(73) Patentinhaber: Becker, Dominic, 59519 Möhnesee (DE)
(72) Erfinder: Becker, Dominic, 59519 Möhnesee (DE)
(74) Vertreter: Griepenstroh, Jörg
(86) Internationale Anmeldenummer: PCT/DE2011/001965
(87) Internationale Veröffentlichungsnummer: WO 2012/062285

(56) Entgegenhaltungen:
- DE-A1- 10 108 537
- DE-A1- 10 340 679
- DE-A1- 19 837 146
- DE-A1- 19 957 407
- DE-U- 1 891 718
- US-A- 3 085 589

## Beschreibung

Die Erfindung betrifft eine Sicherheitsarmatur zum flammendurchschlagsicheren Sperren einer Gas oder Gas mit Staubauteil führenden Leitung gemäß den Merkmalen im Oberbegriff des Patentanspruches 1.

Sicherheitsarmaturen zählen z. B. durch die WO 2006/120091 A1 zum Stand der Technik. Die dort beschriebene Sicherheitsarmatur umfasst einen innerhalb eines Gehäuses beweglichen Schließkörper, der an einer Führungsstange geführt aus einer vordefinierten Offenstellung durch eine Druck- oder Sogwelle in eine dichtende Schließstellung verschiebbar ist. Zum Halten in einer Offenstellung sind verschiedene Federanordnungen vorgesehen. In der Schließstellung gelangt der Schließkörper mit einer Radialfläche an einer ortsfesten Dichtung zur Anlage. Das hat in staubiger Umgebung den Nachteil, dass eine Staubfahne, die sich im Bereich der Dichtung gebildet hat, jedenfalls nicht sicher durchschlagen werden kann. Das hat wiederum zur Folge, dass der Schließkörper an der vorgesehenen Dichtung schräg anliegt und damit nicht sicher schließt. Im Explosionsschutzbereich kann es also dazu kommen, dass Flammen den entstandenen Spalt durchschlagen, sodass die Sicherheitsarmatur wirkungslos ist. Ein weiterer Nachteil ist, dass die relativ dicken Dichtungen aufwendig bearbeitet werden müssen, damit sie an die Kontur des Schließkörpers angepasst werden können. Wünschenswert wäre es hier, Standarddichtungen verwenden zu können.

Durch die DE 18 91 718 U zählt eine Sicherheitsarmatur zum Sperren einer Leitung zum Stand der Technik, wobei die Sicherheitsarmatur in einem erweiterten Abschnitt eines Gehäuses einen in Strömungsrichtung der Leitung geführt linear verlagerbaren und in einer Offenstellung gehaltenen Sperrkörper besitzt. Die tatsächliche Abdichtung erfolgt durch eine stirnseitige Anlage des Sperrkörpers.

Hiervon ausgehend liegt der Erfindung die Aufgabe zugrunde, eine Sicherheitsarmatur aufzuzeigen, welche in der Lage ist, dem Gasstrom Energie zu entziehen und welche auch dann eine sicherere Dichtung bewirkt, wenn sich eine Staubfahne im Dichtungsbereich gebildet hat.

Diese Aufgabe ist für eine Sicherheitsarmatur mit den Merkmalen des Patentanspruches 1 gelöst.

Die Unteransprüche betreffen vorteilhafte Weiterbildungen der Erfindung.

Die erfindungsgemäße Sicherheitsarmatur zum Sperren einer Leitung umfasst einen erweiterten Abschnitt eines Gehäuses. In diesem erweiterten Abschnitt befindet sich ein geführter und linear verlagerbarer Sperrkörper. Der Sperrkörper befindet sich üblicherweise in einer Offenstellung. In dieser Offenstellung kann er durch geeignete Federmittel gehalten sein. Unter dem Einfluss einer Druckschwankung in der Leitung, insbesondere bei einer Explosion und/oder unter der Wirkung eines Aktors wird der Sperrkörper aus seiner Offenstellung in eine Schließstellung verlagert. Das Besondere ist hierbei, dass das Gehäuse einen zylinderischen Schließabschnitt besitzt, in welchem der Sperrkörper in der Schließstellung mit einem Zylinderabschnitt unter Ausbildung eines zylinderischen Ringspaltes eingreift.

Im Unterschied zum Stand der Technik gelangt der Sperrkörper somit nicht mit einer Radialfläche an einer Dichtung zur Anlage, sondern es wird lediglich ein zylinderischer Ringspalt ausgebildet.

Zur Ausbildung dieses Ringspaltes ist zwingend eine Verlagerung einer relativ scharfen Kante entlang einer feststehenden Kante erforderlich. Diese Bewegung führt zu einem Abscheren einer etwaig vorhandenen Staubfahne, die sich im Bereich des Schließabschnittes abgelagert haben kann. Dieses Abscheren der Staubfahne wäre nicht mit der gewünschten Zuverlässigkeit möglich, wenn die Dichtung gewissermaßen zwischen der Stirnseite des Sperrkörpers und dem Gehäuse angeordnet ist. Mit der erfindungsgemäßen Sicherheitsarmatur ist es somit möglich, eine hohe Unempfindlichkeit gegen Verschmutzungen, vorwiegend durch Produktablagerungen, insbesondere bei waagerechten Leitungen bei einer Staubförderung zu realisieren. Die Erfindung eröffnet aber auch die Möglichkeit, diese Art von Sicherheitsarmaturen, die auch als Rückschlagventile bezeichnet werden können, auch im Explosionsschutz zur flammendurchschlagsicheren Entkoppelung, z. B. von pneumatischen Förderanlagen und Absaugleitungen mit sehr hohem Staubanteil zu realisieren, insbesondere wenn mit Produktablagerungen im Bereich des erweiterten Abschnittes des Gehäuses und damit auch im Schließabschnitt zu rechnen ist. Dementsprechend wird die erfindungsgemäße Sicherheitsarmatur bevorzugt als Rückschlagventil zur Entkoppelung eingesetzt, aber auch zur Druckwellensicherung für die Zu- und Abluft von Schutzräumen, z. B. für militärische Anlagen.

Untersuchungen haben gezeigt, dass eine flammendurchschlagsichere Spaltdichtung nur unter eng definierten Umständen realisierbar ist, nämlich dann, wenn der Ringspalt eine Länge von mindestens 20 mm und eine Breite in einem Bereich von 0,2 mm bis 0,5 mm aufweist. Die Breite kann über die Länge des Ringspaltes in den vorstehend angegebenen Grenzen variieren. Vorzugsweise besitzt der Ringspalt eine Länge von 25 bis 35 mm. In einem praktischen Ausführungsbeispiel wurde in einer Länge von 30 mm gewählt. Mit der Länge des Ringspaltes sind diejenigen Bereiche gemeint, in denen der Sperrkörper tatsächlich im radialen Abstand zum umgebenden Schließabschnitt angeordnet ist. Wenigstens ein Bereich dieses Schließabschnittes ist daher zylindrisch ausgebildet. Es ist allerdings auch denkbar, dass in diesem Schließabschnitt aus konstruktiven Gründen auch noch eine kleinere, umlaufende Nut angeordnet ist. Auch ist denkbar, dass der Zylinderabschnitt des Sperrkörpers einen vorgelagerten, leicht konischen Abschnitt besitzt.

Entscheidend bei der Konfiguration des Ringspaltes ist dessen Eigenschaft, flammendurchschlagsicher gestaltet zu sein. Es hat sich gezeigt, dass dies erreicht werden kann, wenn der Schließabschnitt zusammen mit dem ihm umgebenden Umfangsabschnitt eine Wärmekapazität besitzt, die so groß ist, dass einer Flamme im Ringspalt mehr Wärme entzogen wird, als durch Verbrennung in dem Ringspalt entstehen kann. Dadurch erstickt die Flamme. Das gelingt insbesondere durch die sehr große Oberfläche des Ringspaltes, über welche Wärme abgeleitet wird, im Verhältnis zum sehr kleinen Volumen des Ringspaltes.

Grundsätzlich ist die Sicherheitsarmatur mit der vorgesehenen Spaltdichtung ausreichend um eine Flammendurchschlagsicherheit zu gewährleisten. Daher bildet der im Durchmesser größte Bereich des Sperrkörpers den Zylinderabschnitt. Weitere Abstufungen sind grundsätzlich nicht erforderlich. Der Schließkörper selbst, der aus strömungstechnischen Gründen als Doppelkegel oder doppelkegelförmig ausgebildet ist, besitzt mithin den Zylinderabschnitt in seinem mittleren Bereich. Fertigungstechnisch ist ein solcher Zylinderabschnitt sehr leicht herzustellen. Der Zylinderabschnitt kann auch als Kolbenabschnitt bezeichnet werden.

Im Unterschied zur WO 2006/120091 A1 wird der Sperrkörper in der Schließstellung überwiegend aus dem erweiterten Abschnitt des Gehäuses heraus in einen zylinderischen Abschnitt des Gehäuses hinein verlagert. Der Zylinderabschnitt besitzt vorzugsweise einen Außendurchmesser, der etwa dem Innendurchmesser der Leitung entspricht, in welcher die Sicherheitsarmatur zum Einsatz kommt. Daher ist es möglich, den Schließkörper in der Schließstellung überwiegend aus dem erweiterten Abschnitt des Gehäuses heraus in einen zylindrischen Abschnitt des Gehäuses hineinzuverlagern.

Wenn zusätzlich zur Flammendurchschlagsicherung Gasdichtigkeit hergestellt werden soll, ist es möglich, einen Dichtring zum Verschließen des Ringspaltes vorzusehen, wobei der Dichtring in einem bevorzugten Ausführungsbeispiel an dem zuletzt in den Schließabschnitt eintauchenden Ende des Sperrkörpers angeordnet ist.

Alternativ kann der Dichtring an dem Schließabschnitt angeordnet sein.

Ein Vorteil der erfindungsgemäßen Ausgestaltung ist, dass als Dichtring ein Standarddichtring verwendet werden kann, der nicht in besonderer Weise an die Konturierung des Sperrkörpers angepasst sein muss. Der Dichtring kann die Breite des Ringspaltes im Bereich des Dichtrings auf den Wert 0 reduzieren. Bei angestrebter Gasdichte kann eine Spaltbreite von -0,2 mm eingestellt werden, die durch einen Elastomer-Dichtring gebildet werden kann. Ein solcher Dichtring kann auch auf eine Spaltbreite von bis -0,5 mm eingestellt werden, wodurch eine Gasdichte bis 2 bar erreicht werden kann.

Bei der Dichtung kann es sich um einen O-Ring handeln. Ein solcher O-Ring kann auch gegen eine Schräge dichten, die entweder am Gehäuse oder am Sperrkörper ausgebildet ist. Eine solche schmale Schräge oder auch Schrägfläche kann einen kleinen Anschlag bilden. Wichtig ist nämlich, dass der Sperrkörper auch wieder zurückverlagert werden kann. Er soll sich gerade nicht verklemmen, sondern soll leicht wieder zurückgestellt werden können. Der Sperrkörper kann zwar in der Schließstellung zusätzlich dadurch gehalten sein, dass der Dichtring aufblasbar ist, sodass dieser eine höhere Andrückkraft auf den Abschnitt des Sperrkörpers ausübt. Grundsätzlich soll der Sperrkörper aber abgesehen von dieser Andrückkraft im Bereich der einander zugeordneten Schließ- und Zylinderabschnitte klemmungsfrei gegenüber dem Gehäuse gehalten sein. Der Schließkörper verharrt in seiner Schließstellung mithin nicht durch Klemmung, sondern weil zusätzlich eine Federkraft ausgeübt wird und weil gegebenenfalls eine zusätzliche Feststellvorrichtung vorgesehen ist. Diese Feststellvorrichtung kann z. B. manuell gelöst werden. Der Schließkörper soll dann selbsttätig wieder in die Offenstelle zurückverlagert werden. Dies erfolgt mittels Federkraft. Die hierzu erforderliche Federkraft muss dabei auch so groß sein, dass etwaige vorhandene Rasteinheiten, die für die Lagefixierung des Sperrkörpers in der Offenstellung vorgesehen sind, überwunden werden.

Da die erfindungsgemäße Sicherheitsarmatur vorzugsweise in explosionsgeschützten Bereichen zum Einsatz kommt, treten beim Schließen hohe Kräfte auf, insbesondere wenn sehr kurze Schließzeiten gefordert werden, die durch das Einbringen von Fremdenergie noch verkürzt werden. Die beschleunigte Masse des Sperrkörpers muss daher abgebremst werden, damit keine mechanischen Beschädigungen an der Sicherheitsarmatur auftreten. Bei einer mechanischen Dämpfung durch Federn oder Elastomere und insbesondere aber bei einer pneumatischen Dämpfung, wie sie beim Schließvorgang durch Fremdenergie (z. B. einem Gasgenerator, Druckluft oder Federkraft) notwendig wird, ist mit einer Rückfederung des Sperrkörpers von zwei bis zehn Millimetern zu rechnen. Im Rahmen der Erfindung ist vorgesehen, dass das Eindringen des Sperrkörpers in den Schließabschnitt immer so weit erfolgt, dass auch bei maximaler Rückfederung mindestens ein Ringspalt von 20 mm Länge erhalten bleibt um Flammendurchschlagsicherheit zu gewährleisten. Den Weg der Rückfederung kann man im Rahmen der Erfindung dadurch reduzieren, dass die Feststellvorrichtung die Rückstellung des Schließkörpers nach Absinken oder Wegfall, z. B. eines Explosionsdruckes verhindert. Dadurch lässt sich bei entsprechender Fertigungsgenauigkeit die Rückfederung auf ein bis zwei Millimetern begrenzen.

Der besondere Vorteil der erfindungsgemäßen Sicherheitsarmatur, die dafür vorgesehen ist, in Rohrleitungssystemen verwendet zu werden, die Gase und insbesondere Gase mit Staubanteil leiten, ist in der gesteigerten Unempfindlichkeit gegen Verschmutzungen durch Produktablagerungen in dem erweiterten Abschnitt des Gehäuses zu sehen, und darin, dass in dem sehr schmal gehaltenen Ringspalt Flammen ersticken, weil die Flammen mit einer relativ großen Oberfläche mit hoher Wärmekapazität in Kontakt kommen, durch welche dem Gasstrom Energie entzogen wird. Die so geschaffene Sicherheitsarmatur ist mithin flammendurchschlagsicher und gasdicht auslegbar.

Die Erfindung wird nachfolgend anhand von in den Zeichnungen dargestellten Ausführungsbeispielen näher erläutert. Es zeigen:
- Figur 1: einen Längsschnitt durch eine erste Ausführungsform einer erfindungsgemäßen Sicherheitsarmatur;
- Figur 2: eine die Sicherheitsarmatur der Figur in einer Stirnansicht;
- Figur 3: eine weitere Ausführungsform der erfindungsgemäßen Sicherheitsarmatur im Längsschnitt und
- Figur 4: die Sicherheitsarmatur der Figur 3 in einer Stirnansicht.

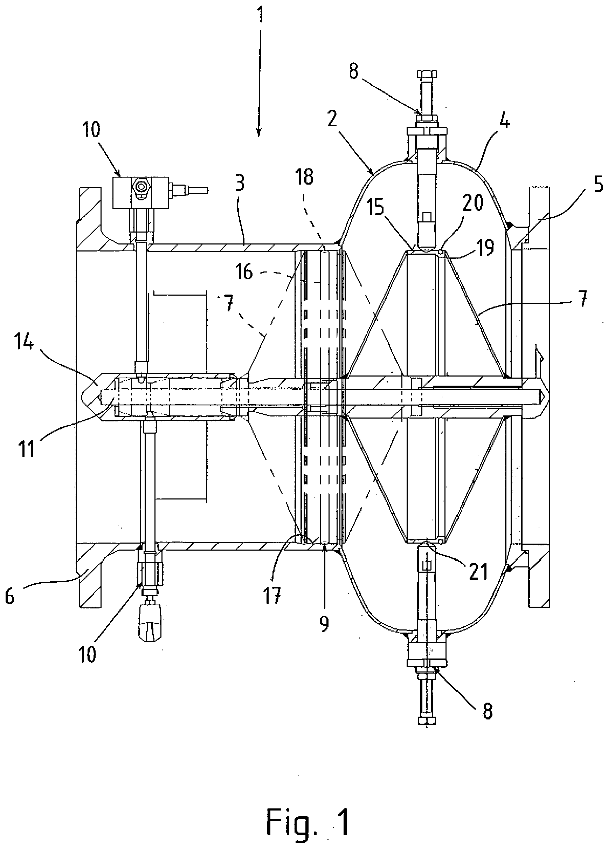

Figur 1 zeigt eine Sicherheitsarmatur 1 die zum Sperren einer nicht näher dargestellten Leitung vorgesehen ist. Die Sicherheitsarmatur 1 kommt z. B. bei pneumatischen Förderanlagen und Absaugleitungen mit hohem Staubanteil zum Einsatz. Die Sicherheitsarmatur 1 dient mithin zum Sperren einer gasführenden Leitung.

Die Sicherheitsarmatur 1 weist ein Gehäuse 2 auf, dass einen Rohrstutzen 3 und einen sich an den Rohrstutzen 3 anschließenden, erweiterten Abschnitt 4 aufweist. In der Bildebene rechts schließt sich in den erweiterten Abschnitt 4 ein endseitiger Flansch 5 an. In der Bildebene links befindet sich am Ende des Rohrstutzens 3 ein weiterer Flansch 6, um die Sicherheitsarmatur 1 mit der Leitung zu verbinden. In Längsrichtung der Sicherheitsarmatur 1 ist im erweiterten Abschnitt 4 ein doppelkegelförmiger Sperrkörper 7 vorgesehen, der von Rasteinheiten 8 in der dargestellten Offenstellung gehalten ist. Der Sperrkörper 7 ist zusätzlich über nicht näher dargestellte Federn in der Offenstellung gehalten.

Bei unzulässiger Druck- oder Strömungserhöhung in der Leitung und damit auch in dem Gehäuse 2 wird der Sperrkörper 7 in der Bildebene nach links in Richtung eines Dichtsitzes 9 verlagert und in dieser Position mit Hilfe einer Feststellvorrichtung 10 gesichert. Diese ist manuell wieder lösbar. In der Zeichnung ist der Sperrkörper 7 einmal in der Offenstellung (durchgezogene Linie) und einmal in der Bildebene nach links in der Schließstellung (unterbrochene Linien) dargestellt. Es ist erkennbar, wie die Feststellvorrichtung 10 in eine umfangsseitige Vertiefung einer Führungsstange 11 fasst, über welche der Sperrkörper 7 zentral innerhalb des Gehäuses 2 geführt wird.

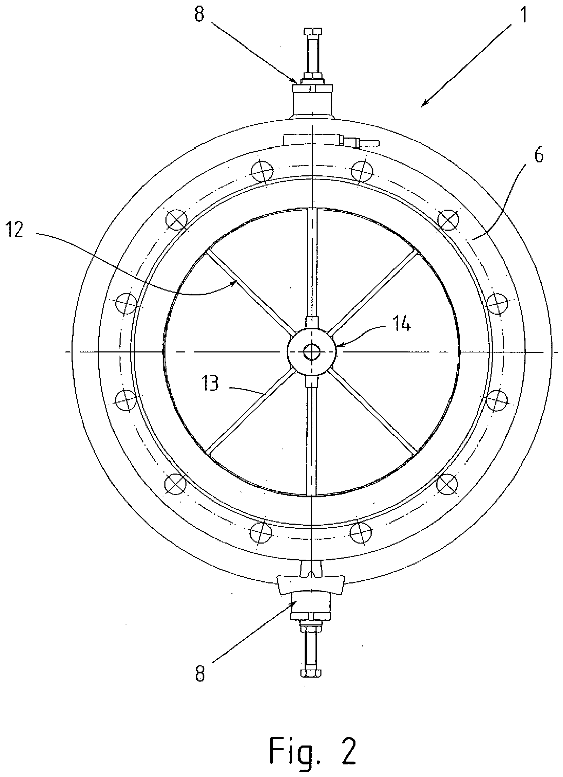

Figur 2 zeigt in der Stirnansicht in Blickrichtung auf den Flansch 6 eine sternförmige Haltevorrichtung 12, die über sich in Radialrichtung erstreckende Streben 13 ein zentrales Führungsgehäuse 14 für die Führungsstange 11 trägt.

Bei der erfindungsgemäßen Sicherheitsarmatur 1 ist die Geometrie des Sperrkörpers 7 wichtig für die Funktion. Der Sperrkörper 7 besitzt in einem mittleren und gleichzeitig im Außendurchmesser größten Bereich einen Zylinderabschnitt 15. Der Zylinderabschnitt 15 wird bei diesem Ausführungsbeispiel von den Rasteinheiten 8 beaufschlagt. Hierzu befindet sich in dem Zylinderabschnitt 15 eine umlaufende Nut 16, die an dem Sperrkörper 7 in der Schließposition zu erkennen ist. Die Nut 16 ist relativ flach und im Nutgrund gerundet. Sie ist an die Geometrie eines kugelförmigen Rastgliedes 21 angepasst, was sich unter dem Einfluss einer Federkraft am inneren Ende der Rasteinheit 8 befindet. Die Rasteinheit 8 ist hinsichtlich der Federvorspannung verstellbar, sodass unterschiedliche Auslösekräfte feinfühlig eingestellt werden können. Die Rasteinheiten 8 sind diametral angeordnet.

Der Zylinderabschnitt 15 ist hinsichtlich seines Außendurchmessers an einen ebenfalls zylindrischen Schließabschnitt 17 benachbart dem erweiterten Abschnitt 4 4a im Rohrstutzen 3 angepasst. Es ist erkennbar, dass der in die Schließstellung verlagerte Sperrkörper 7 mit seinem vollständigen Zylinderabschnitt 15, d. h. mit der gesamten Länge des Zylinderabschnittes 15 in den Schließabschnitt 17 eintaucht, sodass der Großteil des Sperrkörpers 7 aus dem erweiterten Abschnitt 4 des Gehäuses 2 heraus in den zylindrischen Abschnitt, d. h. in den Rohrstutzen 3 des Gehäuses 2 hineinverlagert ist. Hierbei bildet der Zylinderabschnitt 15 mit dem Schließabschnitt 17 einen engen Ringspalt 18 aus, mit einer Länge von 30 mm und einer Breite von 0,5 mm.

Der Ringspalt 18 ist so lang, dass die Sicherheitsarmatur 1 flammendurchschlagsicher ausgebildet ist. Zusätzlich ist an dem in der Bildebene rechten Ende des Zylinderabschnittes 15, d. h. an dem von dem Schließabschnitt 17 entfernt liegenden Ende 19 ein Dichtring 20 angeordnet, über welchen der Ringspalt 18 zusätzlich gasdicht ausgestaltet ist.

In diesem Ausführungsbeispiel besitzt der Ringspalt 18 eine Breite von 0,2 bis 0,5 mm. Hierbei ist die mittlere Breite gemeint, die über den Umfang und die Länge des Zylinderabschnittes 15 gemittelt ist.

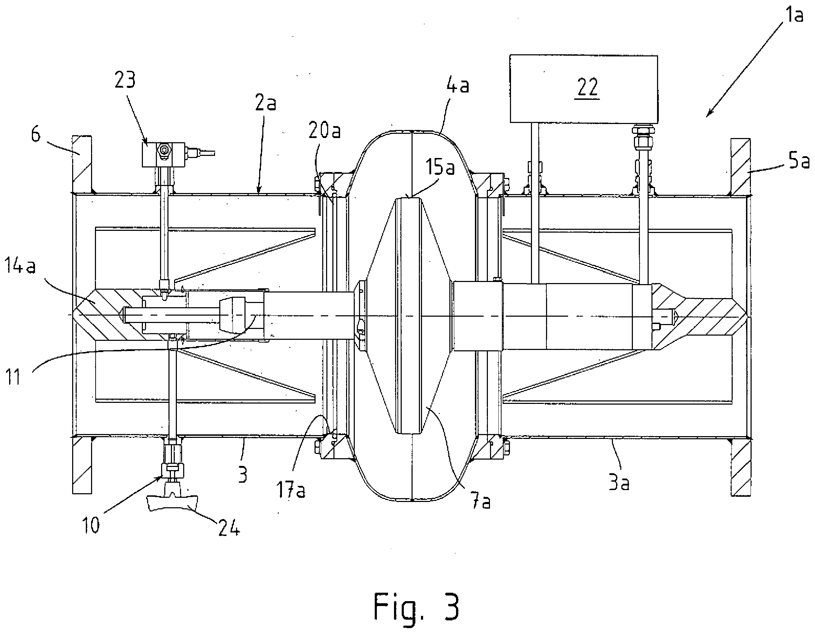

Die Ausführungsform der Figur 3 unterscheidet sich von derjenigen der Figur 1 dadurch, dass es einen zweiten Rohrstutzen 3a gibt, und dass der Flansch 5a mit entsprechend größerem Abstand von dem erweiterten Gehäuseabschnitt 4 angeordnet ist.

Der erweiterte Gehäuseabschnitt 4 befindet sich bei dieser Ausführungsform in der Mitte der Sicherheitsarmatur 1a.

Genau wie bei der ersten Variante ist der Sperrkörper 7a wieder als Doppelkonus ausgeführt, allerdings ist keine Rasteinheit wie in Figur 1 vorgesehen. Dementsprechend ist der Zylinderabschnitt 15a auch ohne umlaufende Nut ausgebildet. Zudem ist an dem Zylinderabschnitt 15a kein Dichtring vorgesehen. Der Dichtring befindet sich bei dieser Variante am Schließabschnitt 17a des Gehäuses 2a. Der Dichtring 20a befindet sich auf der dem erweiterten Abschnitt 4 abgewandten Ende des Schließabschnittes 17a. Dadurch wird sichergestellt, dass eine etwaige Staubfahne, die von dem erweiterten Abschnitt 4 über den unteren Bereich des Schließabschnittes 14 bis in den Rohrstutzen 3 ragt, zunächst von dem Zylinderabschnitt 15a des Sperrkörpers 7a durchschlagen wird, bevor dieser dann an der Dichtung 20a zur Anlage gelangt. Dadurch ist der sich bildende Ringspalt nicht nur flammendurchschlagsicher, sondern zudem gasdicht verschlossen. Die Dichtung kann in einer alternativen Ausgestaltung aufblasbar gestaltet sein und damit jeden gewünschten Dichtigkeitsgrad im Ringspalt erreichen. Bevor der Sperrkörper 7a wieder in seine dargestellte Offenstellung verlagert wird, wird die aufblasbare Dichtung entlastet, sodass die auf den Zylinderabschnitt 15a wirkende Ausdrückkraft der Dichtung fällt und der Sperrkörper 7a klemmungsfrei zurück in die Offenstellung verlagert werden kann.

Ein weiterer Unterschied gegenüber der Ausführungsform der Figur 1 ist, dass die dargestellte Sicherheitsarmatur 1 a über einen pneumatischen Steuerblock 22 angesteuert werden kann, um den Sperrkörper 7a mit sehr kurzer Schließzeit von der Offenstellung in die Schließstellung zu verlagern. Dies kann beispielsweise mittels eines in einem Gasdruckspeicher vorgespannten Gases oder mittels einer pyrotechnischen Auslösung erfolgen. Über eine Erfassungseinheit 23 kann festgestellt werden, ob sich der Sperrkörper 7a in der Offenstellung oder in der Schließstellung befindet. Die bereits in Figur 1 genannten Feststellvorrichtung 10, die gegenüberliegend der Erfassungseinheit 3 angeordnet ist, kann über einen Griff 24 wieder manuell gelöst werden, um den Sperrkörper 7a zurück in die Ausgangsstellung zu verlagern.

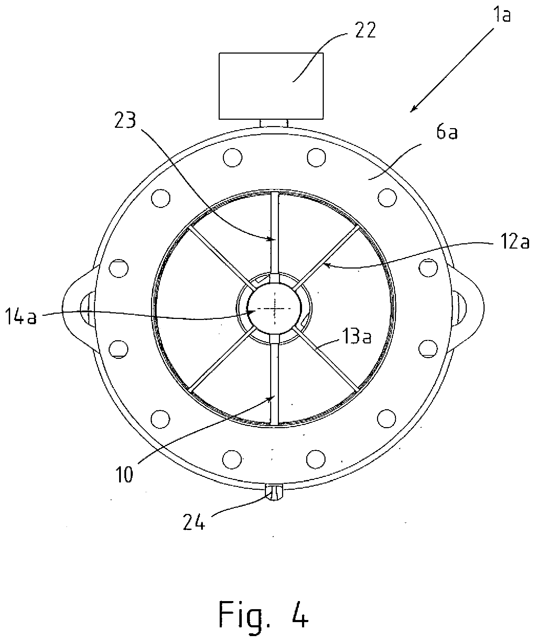

Figur 4 zeigt die Sicherheitsarmatur gemäß Figur 3 in der Stirnansicht auf den Flansch 6, wobei wiederum über eine Haltevorrichtung 12a ein Führungsgehäuse 14a mittels förmig angeordneten Streben 13 gehalten ist.

### Bezugszeichen:

- 1 -: Sicherheitsarmatur
- 1a -: Sicherheitsarmatur
- 2 -: Gehäuse
- 2a -: Gehäuse
- 3 -: Rohrstutzen
- 3a -: Rohrstutzen
- 4 -: erweiteter Abschnitt
- 4a -: erweiteter Abschnitt
- 5 -: Flansch
- 5a -: Flansch
- 6 -: Flansch
- 7 -: Sperrkörper
- 7a -: Sperrkörper
- 8 -: Rasteinheit
- 9 -: Dichtsitz
- 10 -: Feststellvorrichtung
- 11 -: Führungsstange
- 12 -: Haltevorrichtung
- 12a -: Haltevorrichtung
- 13 -: Strebe
- 14 -: Führungsgehäuse
- 14a -: Führungsgehäuse
- 15 -: Zylinderabschnitt
- 15a -: Zylinderabschnitt
- 16 -: Nut
- 17 -: Schließabschnitt
- 17a -: Schließabschnitt
- 18 -: Ringspalt
- 19 -: Ende
- 20 -: Dichtring
- 20a -: Dichtring
- 21 -: Rastglied
- 22 -: Steuerblock
- 23 -: Erfassungseinheit
- 24 -: Griff

## Patentansprüche

1. Sicherheitsarmatur zum Sperren einer Leitung, die in einem erweiterten Abschnitt (4, 4a) eines Gehäuses (2, 2a) einen in Strömungsrichtung der Leitung geführt linear verlagerbaren und in einer Offenstellung gehaltenen Sperrkörper (7, 7a) besitzt, welcher unter dem Einfluss einer Druckschwankung in der Leitung oder aktiv in eine Schließstellung verlagerbar ist, wobei das Gehäuse (2, 2a) einen zylindrischen Schließabschnitt (17, 17a) besitzt, in welchen der Sperrkörper (7, 7a) in der Schließstellung mit einem Zylinderabschnitt (15, 15a) unter Ausbildung eines zylindrischen Ringspaltes (18) eingreift, wobei der Zylinderabschnitt (15, 15a) der im Durchmesser größte Bereich des Sperrkörpers (7, 7a) ist, wobei der Schließabschnitt (17, 17a) zusammen mit dem Zylinderabschnitt (15, 15a) eine Wärmekapazität besitzt, die einer Flamme in dem Ringspalt (18) mehr Wärme entzieht als durch Verbrennung in dem Ringspalt (18) entstehen kann.

2. Sicherheitsarmatur nach Anspruch 1, **dadurch gekennzeichnet, dass** der Ringspalt (18) eine Länge von mindestens 20 mm und eine Breite in einem Bereich von 0,2 mm bis 0,5 mm aufweist.

3. Sicherheitsarmatur nach Anspruch 1, **dadurch gekennzeichnet, dass** der Ringspalt (18) eine Länge von 25 - 35 mm besitzt.

4. Sicherheitsarmatur nach einem der Ansprüche 1 bis 3, **dadurch gekennzeichnet, dass** der Sperrkörper (7, 7a) in der Schließstellung überwiegend aus dem erweiterten Abschnitt (4, 4a) des Gehäuses (2, 2a) heraus und in einen zylindrischen Abschnitt (3) des Gehäuses (2, 2a) hinein verlagert ist.

5. Sicherheitsarmatur nach einem der Ansprüche 1 bis 4, **dadurch gekennzeichnet, dass** ein Dichtring (20) zum Verschließen des Ringspaltes (18) vorgesehen ist, wobei der Dichtring (20) an dem zuletzt in den Schließabschnitt (17) eintauchenden Ende (19) des Sperrkörpers (7) angeordnet ist.

6. Sicherheitsarmatur nach einem der Ansprüche 1 bis 5, **dadurch gekennzeichnet, dass** ein Dichtring (20a) an dem Schließabschnitt (17) angeordnet ist.

7. Sicherheitsarmatur nach Anspruch 6, **dadurch gekennzeichnet, dass** der Dichtring aufblasbar ist, um in der Schließstellung eine höhere Andrückkraft auf den Zylinderabschnitt (15a) des Sperrkörpers (7a) auszuüben.

8. Sicherheitsarmatur nach einem der Ansprüche 1 bis 7, **dadurch gekennzeichnet, dass** der Sperrkörper (7, 7a) abgesehen von einer von einem optional vorhandenen Dichtring (20, 20a) ausgehenden radial wirkenden Andrückkraft in der Schließstellung im Bereich der einander zugeordneten Schließ- und Zylinderabschnitte (15, 17; 15a, 17a) klemmungsfrei gegenüber den Gehäuse (2, 2a) gehalten ist.

## Claims

1. Safety fitting for blocking a pipe, said fitting having a blocking element (7, 7a) that is located in a widened section (4, 4a) of a housing (2, 2a), can be guided linearly in the flow direction of the pipe, and is held in an open position, which blocking element can be moved under the influence of a variation in pressure in the pipe or can be moved actively into a sealing position, wherein the housing (2, 2a) has a cylindrical blocking section (17, 17a) in which, in the sealing position, the blocking element (7, 7a) engages with a cylindrical section (15, 15a) forming a cylindrical annular gap (18), wherein the cylindrical section (15, 15a) is the area of the blocking element (7, 7a) which has the largest diameter, wherein the blocking section (17, 17a) together with the cylindrical section (15, 15a) has a heat capacity which removes more heat from a flame in the annular gap (18) than can be produced by burning in the annular gap (18).

2. Safety fitting according to claim 1, **characterised in that**, wherein the annular gap (18) has a length of at least 20 mm and a width in a range from 0.2 mm to 0.5 mm.

3. Safety fitting according to claim 1, **characterised in that** the annular gap (18) has a length of 25 to 35 mm.

4. Safety fitting according to any one of claims 1 to 3, **characterised in that**, in the sealing position, the blocking element (7, 7a) is moved predominantly out of the widened section (4, 4a) of the housing (2, 2a) and into a cylindrical section (3) of the housing (2, 2a).

5. Safety fitting according to any one of claims 1 to 4, **characterised in that** a sealing ring (20) is provided for closing the annular gap (18), wherein the sealing ring (20) is arranged on the end (19) of the blocking element (7) which dips into the blocking section (17) last.

6. Safety fitting according to any one of claims 1 to 5, **characterised in that** a sealing ring (20a) is arranged on the blocking section (17).

7. Safety fitting according to claim 6, **characterised in that** the sealing ring can be inflated to exert a higher pressing force on the cylindrical section (15a) of the blocking element (7a) in the sealing position.

8. Safety fitting according to any one of claims 1 to 7, **characterised in that** apart from a radially acting pressing force issuing from an optionally present sealing ring (20, 20a), the blocking element (7, 7a) is held in the sealing position, without clamping with respect to the housing (2, 2a), in the region of the mutually associated blocking and cylindrical sections (15, 17; 15a, 17a).

## Revendications

1. Ferrure de sécurité pour obturer une conduite, laquelle ferrure de sécurité a, dans un tronçon élargi (4, 4a) d'un boîtier (2, 2a), un corps d'obturation (7, 7a) qui est déplaçable linéairement, guidé dans la direction d'écoulement de la conduite, qui est maintenu dans une position ouverte et qui est déplaçable dans une position fermée soit sous l'influence d'une variation de pression dans la conduite soit de façon active, le boîtier (2, 2a) ayant un tronçon de fermeture cylindrique (17, 17a) dans lequel pénètre le corps d'obturation (7, 7a) dans la position fermée avec un corps de cylindre (15, 15a) en formant une fente annulaire cylindrique (18), le tronçon de cylindre (15, 15a) étant la plus grande zone en diamètre du corps d'obturation (7, 7a), le tronçon de fermeture (17, 17a) ayant conjointement avec le tronçon de cylindre (15, 15a) une capacité thermique qui absorbe d'une flamme dans la fente annulaire (18) plus de chaleur qu'il n'en peut apparaître par combustion dans la fente annulaire (18).

2. Ferrure de sécurité selon la revendication 1, **caractérisée en ce que** la fente annulaire (18) a une longueur d'au moins 20 mm et une largeur comprise entre 0,2 mm et 0,5 mm.

3. Ferrure de sécurité selon la revendication 1, **caractérisée en ce que** la fente annulaire (18) a une longueur comprise entre 25 et 35 mm.

4. Ferrure de sécurité selon l'une des revendications 1 à 3, **caractérisée en ce que** le corps d'obturation (7, 7a) est déplacé, dans la position fermée, principalement hors du tronçon élargi (4, 4a) du boîtier (2, 2a) jusque dans un tronçon cylindrique (3) du boîtier (2, 2a).

5. Ferrure de sécurité selon l'une des revendications 1 à 4, **caractérisée en ce qu'**une bague d'étanchéité (20) est prévue pour obturer la fente annulaire (18), la bague d'étanchéité (20) étant agencée sur l'extrémité (19), plongeant en dernier dans le tronçon de fermeture (17), du corps d'obturation (7).

6. Ferrure de sécurité selon l'une des revendications 1 à 5, **caractérisée en ce qu'**une bague d'étanchéité (20a) est agencée sur le tronçon de fermeture (17).

7. Ferrure de sécurité selon la revendication 6, **caractérisée en ce que** la bague d'étanchéité peut être gonflée pour, dans la position fermée, exercer une force de poussée supérieure sur le tronçon de cylindre (15) du corps d'obturation (7a).

8. Ferrure de sécurité selon l'une des revendications 1 à 7, **caractérisée en ce que**, hormis une force de poussée agissant radialement à partir d'une bague d'étanchéité (20, 20a) présente en option, le corps d'obturation (7, 7a) est maintenu dans la position fermée sans serrage par rapport au boîtier (2, 2a) dans la zone des tronçons de fermeture et de cylindre (15,17; 15a, 17a) associés l'un à l'autre.
